# EUROPEAN PATENT APPLICATION

(11) **EP 2 301 764 A1**
(43) Date of publication of application: **30.03.2011**
(21) Application number: 09769842.7
(22) Date of filing: 25.05.2009
(51) Int. Cl.: B60B 33/00, B62B 5/04

(54) **CASTER WITH BRAKE**

(30) Priority: 24.06.2008 JP 2008164171
(71) Applicant: Yazaki Kako Corporation, Shizuoka-shi, Shizuoka 422-8519 (JP)
(72) Inventor: MINOWA, Isamu, Shizuoka-shi Shizuoka 422-8519 (JP)
(74) Representative: Lamb, Martin John Carstairs
(86) International application number: PCT/JP2009/002287
(87) International publication number: WO 2009/157132

(57) **Abstract**

A brake-equipped swivel caster including a tired wheel rotatably fitted to a support leg comprises a movable pin allowed to move up and down inside the vertical axial member and normally retained by an elastic member in its uppermost position, left and right brake arms in a pair swingably fitted to the support leg and normally retained by elastic members such that their lower ends are a specified distance apart from the lateral wheel surfaces of the tired wheel, and an operation mechanism arranged over the movable pin. When the operation mechanism pushes down the movable pin a specified distance, a tapered lower end portion of the movable pin causes the brake arms to turn by pushing outward on the upper ends of the brake arms, so that the lower ends of the brake arms are pressed against the lateral wheel surfaces of the tired wheel.

## Description

### BACKGROUND OF THE INVENTION

### Field of the Invention

This invention belongs to a technical field of brake-equipped casters used for hand-pushed wheeled platforms and the like, and specifically relates to a brake-equipped caster designed to produce a braking effect by pressing brake shoes (the lower ends of brake arms) against the lateral wheel surfaces of a tired wheel.

### Description of the Related Art

Patent Documents 1 to 3 all disclose a brake-equipped caster designed to produce a braking effect by pressing a brake shoe against the tire surface of a tired wheel.

Patent Document 4 discloses a brake-equipped caster designed to produce a braking effect by pressing brake shoes against the lateral wheel surfaces of a tired wheel.
Patent Document 1: Patent Publication No. 2759599
Patent Document 2: Patent Application KOKAI Publication Hei 11-59113
Patent Document 3: Patent application KOKAI Publication Hei 11-91305
Patent Document 4: Patent Application KOHYO Publication 2004-508236

In the brake-equipped casters disclosed in Patent Documents 1 to 3, friction between the tire surface of a tired wheel and the brake shoe provides the braking effect, entailing a far greater degree of wear on the tire, compared with when the caster experiences wear only under normal traveling. The more the tire thickness is reduced, the faster the pressure which the brake shoe applies on the tire surface decreases, resulting in acute deterioration of braking performance. This entails increased frequency of replacing worn tires (or tired wheels), which is uneconomical.

Further, when the tire surface is slippery due to a wet road surface or due to mud or sand attached to the tire surface, the brake shoe is liable to slide, resulting in deterioration of braking performance. In this way, the casters of this type are susceptible to poor road surface conditions and have difficulty in producing a stable braking effort.

The brake-equipped caster disclosed in Patent Document 4, on the other hand, is designed to produce a braking effect by pressing brake shoes against the lateral wheel surfaces of a tired wheel, and therefore does not suffer the problems mentioned above, since the brake shoes do not wear down the tire of the tired wheel.

However, as shown in FIGS. 1 to 4 of Patent Document 4, this brake-equipped caster is designed to move left and right brake arms (241, 24r) as a pair by means of an upward-bent, elongated, extremely-thin leaf spring (30) provided between the brake arms. The leaf spring (30) is therefore prone to temporal deformation and fatigue breaking, and it is extremely difficult to maintain the function of braking a tired wheel by applying an equal pressure on the left and right lateral wheel surfaces of the tired wheel (18) by means of the brake arms (241, 24r). This brake-equipped caster also has the drawback that the brake system is complicated and therefore costly.

### SUMMARY OF THE INVENTION

An object of the present invention is to provide a brake-equipped caster which is designed to produce a braking effect by pressing brake shoes against the lateral wheel surfaces of a tired wheel so that the brake shoes do not wear down the tire of the tired wheel, and therefore suffers minimized wear on the tire and is not susceptible to poor road surface conditions.

Another object of the present invention is to provide a brake-equipped caster which can maintain the function of braking a tired wheel by applying equal pressure on the left and right lateral wheel surfaces of the tired wheel, using a simple structure, reliably and durably, and therefore provides superior economy and durability.

In order to solve the above-mentioned problems with the prior art, the present invention provides a brake-equipped swivel caster which includes a downward C-shaped support leg arranged under and rotatably fitted to a fitting seat by means of a vertical axial member and a thrust bearing, and a tired wheel arranged under and rotatably fitted to the support leg, comprising:
a movable pin extending through the vertical axial member which is allowed to move up and down, the movable pin being normally retained in its uppermost position by an elastic member;
left and right brake arms in a pair each arranged with a lower end facing a lateral wheel surface of the tired wheel and an upper end in contact with the movable pin, and swingably fitted to an inner surface of the downward C-shaped support leg, at an intermediate position, the brake arms being normally retained by elastic members such that their lower ends are a specified distance apart from the lateral wheel surfaces of the tired wheel, respectively;
a tapered portion constituting a lower end portion of the movable pin and having an angle of tapering capable of pushing outward on the upper ends of the brake arms as a pair to draw them away from each other; and
an operation mechanism arranged over the movable pin, capable of pushing down the movable pin a specified distance, thereby causing the lower ends of the brake arms to be pressed against the lateral wheel surfaces of the tired wheel, respectively.

In a preferred configuration, the upper ends of the left and right brake arms as a pair are in contact with an inclined surface of the tapered lower end portion of the movable pin at an angle allowing the brake arms to receive an outward pushing force greater in magnitude than the force which the elastic members exert on the brake arms, respectively.

The present invention also provides a brake-equipped swivel caster including a downward C-shaped support leg arranged under and rotatably fitted to a fitting seat by means of a vertical axial member and a thrust bearing, and a tired wheel arranged under and rotatably fitted to the support leg, comprising:
a movable pin extending through the vertical axial member which is allowed to move up and down, the movable pin being normally retained in its uppermost position by an elastic member;
left and right brake arms in a pair each arranged with a lower end facing a lateral wheel surface of the tired wheel and an upper end in contact with the movable pin, and swingably fitted to an inner surface of the downward C-shaped support leg, at an intermediate position, the brake arms being normally retained by elastic members such that their lower ends are pressed against the lateral wheel surfaces of the tired wheel, respectively; and
an operation mechanism arranged over the movable pin, capable of pushing down the movable pin a specified distance, thereby causing the lower ends of the brake arms to draw apart from the lateral wheel surfaces of the tired wheel, respectively.

In the above-described two types of brake-equipped casters, it is desirable that the left and right brake arms as a pair be in a dogleg shape from an elevational view and arranged to form line symmetry with respect to an axis of the movable pin.

The brake-equipped casters according to the present invention are designed to produce a braking effect by pressing the brake shoes against the lateral wheel surfaces of the tired wheel so that the brake shoes do not wear down the tire of the tired wheel, and therefore suffers minimized wear on the tire and is not susceptible to poor road surface conditions.

Further, they can maintain the function of braking the tired wheel by applying equal pressure on the left and right lateral wheel surfaces of the tired wheel, with a simple structure, reliably and durably, and therefore provide superior usability, economy and durability.

Further, fitting the caster with the brake system only requires mechanical fitting operations. Thus, conventional swivel casters without a braking function can be easily and economically converted into brake-equipped casters according to the present invention.

One of the above-described two types of brake-equipped casters according to the present invention is designed to be able normally to rotate (travel) and to be halted by a braking effort produced by the above-described structure when the operation mechanism (the brake lever) is activated. This is suitable for hand-pushed wheeled platforms and the like used for transport on a flat road surface, for example.

The other type is designed to be normally held in an automatic halt condition by the braking effort produced by the above-described structure and to become capable of traveling when the operation mechanism (the brake lever) is activated. This is suitable for hand-pushed wheeled platforms and the like used for transport on a sloping road surface requiring frequent braking operations, for example.

### BRIEF DESCRIPTION OF THE DRAWINGS

The present invention will become more fully understood from the detailed description given hereinbelow and the accompanying drawings which are given by way of illustration only, and thus, are not limitative of the present invention, wherein:
FIG. 1 is a front view showing the main part of a brake-equipped caster according to embodiment 1,
FIG. 2 is a front view showing the main part of the brake-equipped caster of FIG. 1 with a brake lever activated,
FIG. 3 is a side view of the main part of the brake-equipped caster of FIG. 1,
FIG. 4 is an enlarged cross-sectional view along line X-X in FIG. 1, viewed as indicated by the arrows,
FIG. 5 is a front view showing the structure of a movable pin used in the brake-equipped caster according to embodiment 1,
FIG. 6 is a front view showing the main part of a brake-equipped caster according to embodiment 2,
FIG. 7 is a front view showing the main part of the brake-equipped caster of FIG. 6 with a brake lever activated, and
FIG. 8 is a perspective view schematically showing the overall structure of the brake-equipped caster according to the present invention.

### DETAILED DESCRIPTION OF THE PREFERRED EMBODIMENTS

The brake-equipped caster according to the present invention is designed to produce a braking effect by pressing the lower ends (the brake shoes) of the brake arms against the lateral wheel surfaces of a tired wheel.

Embodiment 1 is designed to be able normally to rotate (travel) and to be halted by a braking effort when an operation mechanism (the brake lever) is activated.

Embodiment 2, on the other hand, is designed to be normally held in an automatic halt condition by a braking effect and to become capable of traveling when the operation mechanism (the brake lever) is activated.

### Embodiment 1

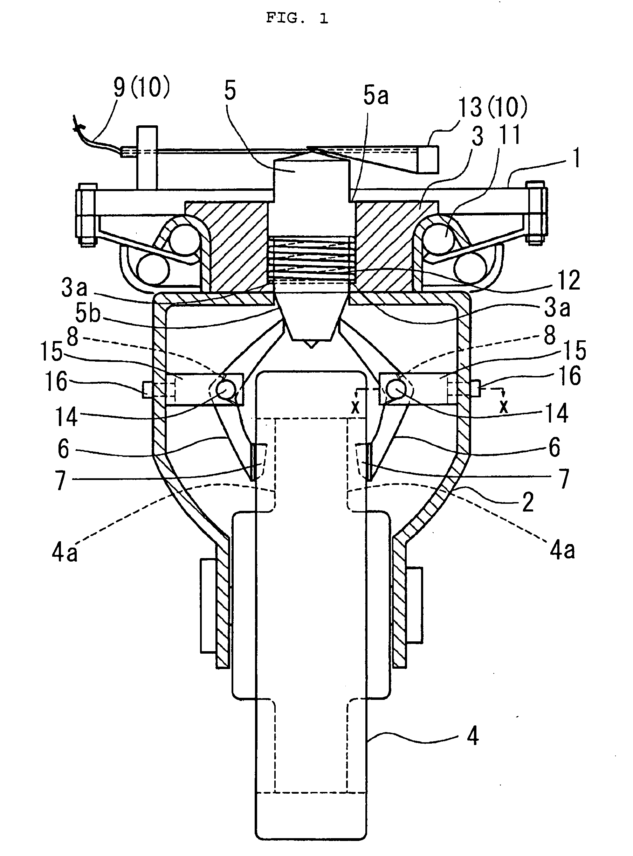

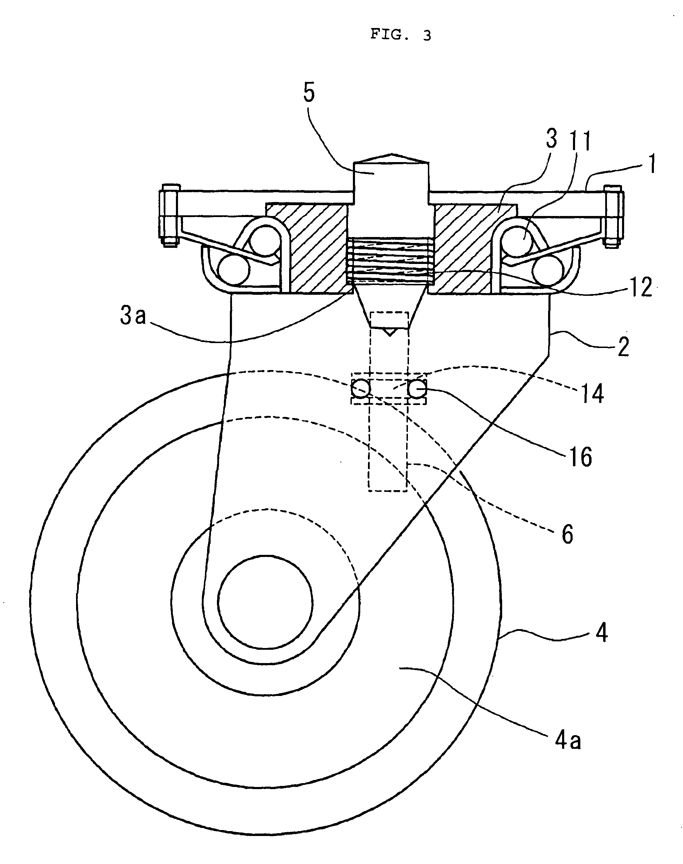

FIGS. 1 to 3 show the main part of a brake-equipped caster according to embodiment 1 of the present invention.

This brake-equipped caster is a swivel caster including a support leg 2 in the shape of a downward C, namely a C turned 90 degrees clockwise, arranged under and rotatably fitted to a fitting seat 1 by means of a vertical axial member (in the depicted example, a bushing) 3 and a thrust bearing 11, and a tired wheel 4 arranged under and rotatably fitted to the support leg 2.

A movable pin 5 allowed to move up and down extends through the vertical axial member 3. The movable pin 5 is normally retained in its uppermost position by an elastic member (in the depicted example, a compression coil spring) 12.

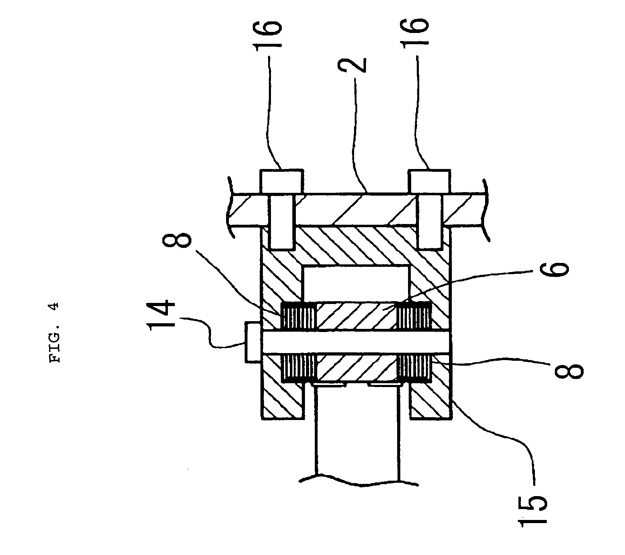

Left and right brake arms 6, 6 in a pair are arranged with their lower end facing each lateral wheel surface 4a of the tired wheel 4 and their upper ends in contact with the movable pin 5, and swingably fitted to the inner surface of the downward C-shaped support leg 2, at their intermediate position. The brake arms 6, 6 are normally retained by elastic members (in the depicted example, torsion coil springs; see FIG. 4) 8, 8 such that their lower ends are a specified distance apart from the lateral wheel surfaces 4a of the tired wheel 4a, respectively. Brake shoes 7, 7 made of an elastomer having rubber elasticity are provided at the lower ends of the respective brake arms 6, 6 to increase the friction acting on the lateral wheel surfaces 4a of the tired wheel 4, thereby reliably producing braking effort.

The movable pin 5 includes a tapered lower end portion 5b having an angle of tapering capable of pushing outward on the upper ends of the brake arms 6, 6 as a pair to draw them away from each other. Over the movable pin 5, an operation mechanism 10 is arranged to push down the movable pin 5 a specified distance, thereby causing the lower ends (brake shoes 7, 7) of the brake arms 6,6 to be pressed against the lateral wheel surfaces 4a of the tired wheel 4, respectively.

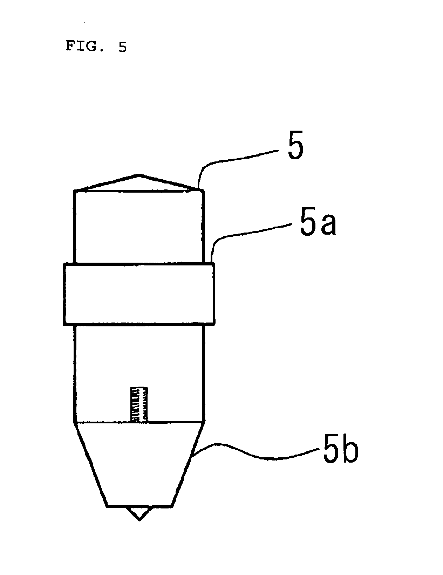

As shown also in FIG. 5, the movable pin 5 is a cylindrical member of metal with its upper and lower end portions tapered, and has an annular ridge 5a at an intermediate position.

The movable pin 5 is allowed to move relatively up and down inside the vertical axial member 3. Specifically, the vertical axial member 3 has an inner surface with a step 3a at the lower end, and a compression coil spring (elastic member) 12 is mounted on the top surface of the step 3a. The movable pin 5 is arranged to extend inside the compression coil spring 12 with its ridge 5a seated on top of the compression coil spring 12. The upper face of the ridge 5a of the movable pin 5 butts against the lower surface of the fitting seat 1, constituting a structure to prevent the pin from falling off.

Thus, the movable pin 5 is normally retained in a position with its ridge 5a butting against the lower surface of the fitting seat 1 (its uppermost position) by the restoring force of the compression coil spring 12 compressed on the step 3a of the vertical axial member 3.

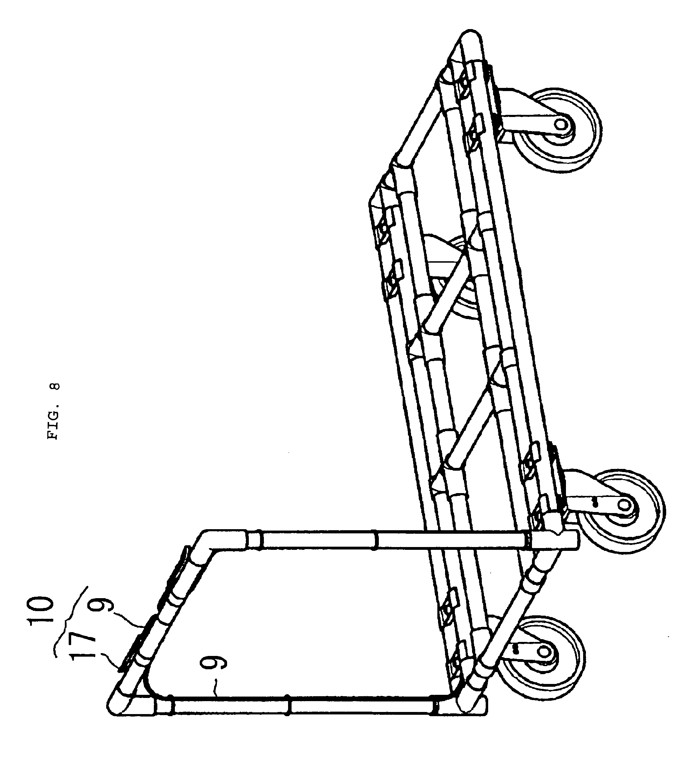

The operation mechanism 10 is designed to push downward on the head of the movable pin 5 projecting upward beyond the fitting seat 1, thereby pushing down the movable pin 5 a specified distance. Incidentally, the present embodiment is arranged such that when a brake lever 17 (see FIG. 8) attached to a handle of a wheeled platform is activated, a wire 9 connected to the lever 17 displaces a pusher 13 horizontally, so that the pusher 13 comes in contact with the head of the movable pin 5 and pushes down the movable pin 5.

The configuration of the operation mechanism 10 is not restricted to this. For example, the movable pin 5 may be pushed down by a cam mechanism pushing downward on the head of the movable pin 5. The shape of the head of the movable pin 5 is not restricted to a tapered shape but may be varied appropriately depending on the shape of a pusher 13 used.

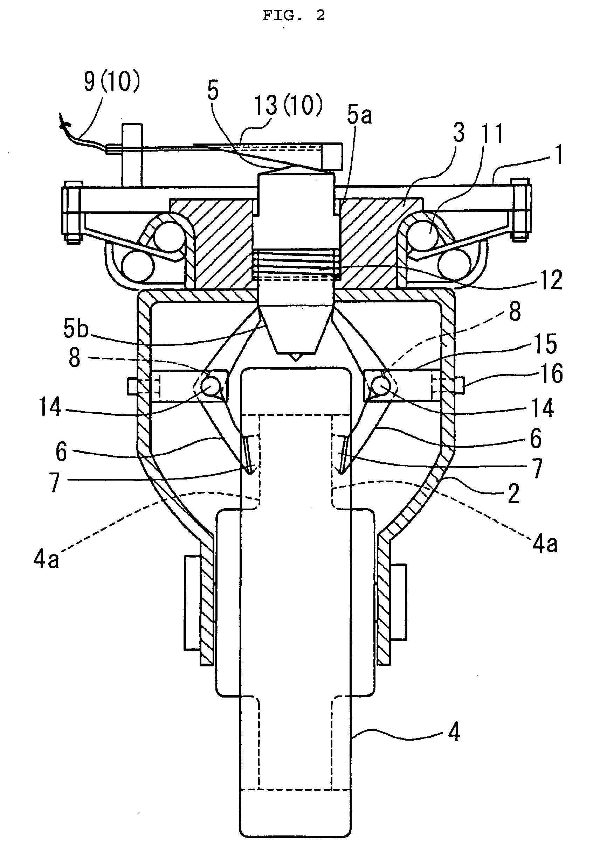

Thus, when the operation mechanism 10 (brake lever 17) is activated, the pusher 13 gradually pushes down the movable pin 5, where the ridge 5a of the movable pin 5 draws away from the lower surface of the fitting seat 1, pressing the compression coil spring 12 downward (see FIG. 2).

When the operation mechanism 10 is deactivated, the pusher 13 draws away from the movable pin 5, allowing the movable pin 5 to be pushed up by the restoring force of the compression coil spring 12 acting on the ridge 5a of the movable pin 5, until the ridge 5a butts against the lower surface of the fitting seat 1 again.

The shape of the movable pin 5 as well as the structure causing the movable pin 5 to move relatively up and down is not restricted to the depicted example. For example, the elastic member 12 may be any type; the compression coil spring 12 may be replaced with a cylinder of rubber. The location and shape of the ridge 5a of the movable pin 5 as well as those of the step 3a of the vertical axial member 3 may be varied appropriately.

To sum up, it is only required that the movable pin 5 be able to move up and down a specified distance relative to the vertical axial member 3; the configuration may be varied in various ways as long as this requirement is met.

In the present embodiment, the tapered lower end portion 5b of the movable pin 5 is provided as a replaceable member fitted to the body of the movable pin 5 by means of a bolt-nut structure as shown in FIG. 5, in order to enable appropriate regulation of the braking performance by replacement of lower end portions different in angle of tapering depending on road surface conditions, and considering the fact that the lower end portion 5b is prone to deterioration and damage.

In the elevational view, the left and right brake arms 6, 6 as a pair are dogleg members of metal, arranged to form line symmetry with respect to the axis of the movable pin 5. The shape of the brake arm 6 is however not restricted to this dogleg shape.

The brake arms 6 are swingably fitted to the inner surface of the support leg 2. In the present embodiment, as shown also in FIG. 4, support members 15 are fixed to the inner surface of the support leg 2 by bolts 16 to form line symmetry. A horizontal shaft 14 extends through each support member 15, at right angles to arms of the support member 15. The horizontal shaft 14 rotatably extends through the intermediate angled portion of the brake arm 6. Thus, the brake arm 6 is swingably fitted to the support member 15 by means of the horizontal shaft 14. A torsion coil spring (the elastic member) 8 is inserted in the horizontal shaft 14 and connected to the support member 15 at one end and the brake arm 6 at the other end to apply a torque tending to cause the brake arm to turn in a direction causing the brake shoe 7 on the brake arm to draw away from the lateral wheel surface 4a of the tired wheel 4. Thus, the brake shoe 7 is normally retained a specified distance apart from the lateral wheel surface 4a of the tired wheel 4.

Although in the present example, the torsion coil spring 8 is used as the elastic member 8, it may be replaced with, for example a compression spring, which is arranged between the support member 15 and the brake arm 6, for example over the horizontal shaft 14, parallel to the direction of swinging of the brake arm 6. In short, the elastic member 8 is used to make the brake arm 6 return to the same position. This holds true of embodiment 2 described later.

The left and right brake arms 6, 6 as a pair are arranged such that their upper ends are in contact with the inclined surface of the tapered lower end portion 5a of the movable pin 5 at an angle allowing the brake arms to receive an outward pushing force greater in magnitude than the torque which the torsion coil springs 8, 8 exert on the brake arms, respectively. This is to allow the horizontal components of the force exerted by the movable pin 5 pushed down, which components are produced due to the inclined surface of the tapered lower end portion functioning like a wedge, to appropriately act on the upper ends of the brake arms 6, 6, namely push outward on the upper ends of the brake arms 6, 6 to draw them away from each other, thereby causing the brake shoes 7, 7 on the brake arms 6, 6 to come in contact with and apply an appropriate pressure on the left and right lateral wheel surfaces 4a of the tired wheel 4, thereby braking the tired wheel.

Thus, as shown in FIG. 1, while the operation mechanism 10 is deactivated so that the movable pin 5 is in its uppermost position, the left and right brake arms 6, 6 in a pair are retained by the torque exerted by the torsion coil springs 8 such that the brake shoes 7 at their lower ends are a specified distance apart from the lateral wheel surfaces 4a of the tired face 4, respectively.

As shown in FIG. 2, when the operation mechanism 10 is activated so that the movable pin 5 is pushed down, the upper ends of the brake arms 6, 6 are gradually displaced outward, along the inclined surface of the tapered lower end portion 5b of the movable pin 5, against the torque exerted by the torsion coil springs 8, so that the brake shoes 7, 7 at the lower ends of the brake arms 6, 6 gradually approach each other and finally come in contact with and apply an equal pressure on the left and right lateral wheel surfaces 4a of the tired wheel 4, thereby braking the tired wheel.

Thus, in the brake-equipped caster according to the present invention, while the caster is traveling and therefore the operation mechanism 10 is deactivated, the operation mechanism 10 (pusher) 13 is not in contact with the movable pin 5 and the brake shoes 7 on the brake arms 6 are not in contact with the lateral wheel surfaces 4a of the tired wheel 4 as shown in FIG. 1, so that a worker can move the wheeled platform by manual operation, turning it as desired.

When the operation mechanism 10 is activated, the pusher 13 of the operation mechanism 10 pushes down the movable pin 5, which in turn causes the left and right brake arms 6, 6 in a pair to turn against the torque exerted by the torsion coil springs 8. As a result, the brake shoes 7, 7 provided at their lower ends come in contact with and apply an equal pressure on the left and right lateral wheel surfaces 4a of the tired wheel 4, thereby braking the tired wheel. In other words, as shown in FIG. 2, activation of the operation mechanism 10 causes contact between the operation mechanism 10 (pusher 13) and the movable pin 5, and contact between the brake shoes 7 on the brake arms 6 and the lateral wheel surfaces 4a of the tired wheel 4, serially. Thus, the force applied by the worker to activate the brake lever 17 is smoothly transferred to the lateral wheel surfaces 4a of the tired wheel 4, causing the traveling wheeled platform to halt at the intended location.

In the above-described brake-equipped caster, which is designed to produce a braking effect by pressing the brake shoes 7 against the lateral wheel surfaces 4a of the tired wheel 4, the brake shoes 7 do not wear down the tire of the tired wheel 4. The above-described brake-equipped caster therefore suffers minimized wear on the tire of the tired wheel and is not susceptible to poor road surface conditions.

Further, the function of braking the tired wheel by applying equal pressure on the left and right lateral wheel surfaces 4a, 4a of the tired wheel 4 can be maintained with a simple structure, reliably and durably, resulting in superior usability, economy and durability.

Further, fitting the caster with the brake system only requires mechanical fitting operations. Thus, conventional swivel casters without a braking function can be easily and economically converted into brake-equipped casters according to the present invention.

The brake-equipped caster according to embodiment 1 is designed to be able normally to rotate (travel) and to be halted by the braking effort produced by the above-described structure when the operation mechanism (the brake lever) is activated. This is suitable for hand-pushed wheeled platforms and the like used for transport on a flat road surface, for example.

### Embodiment 2

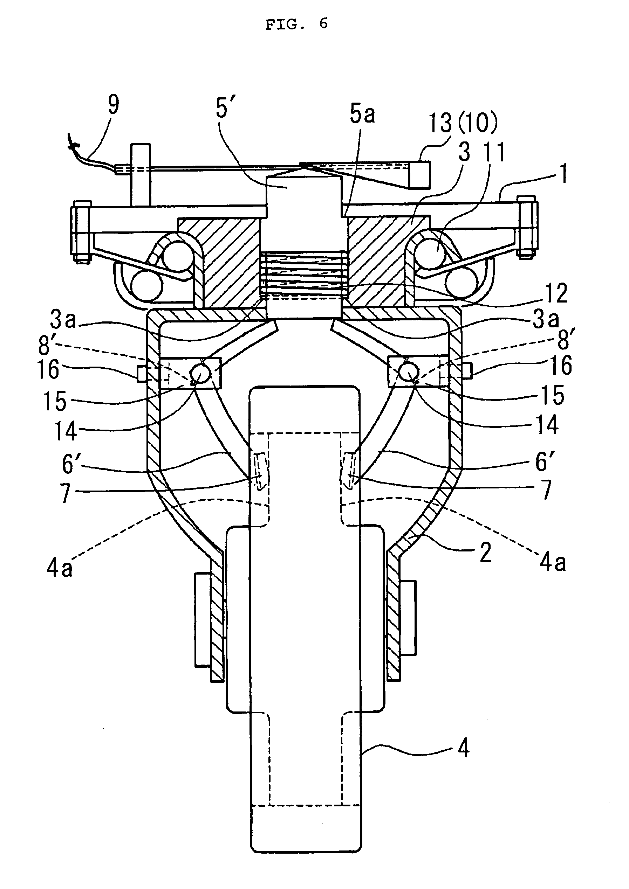

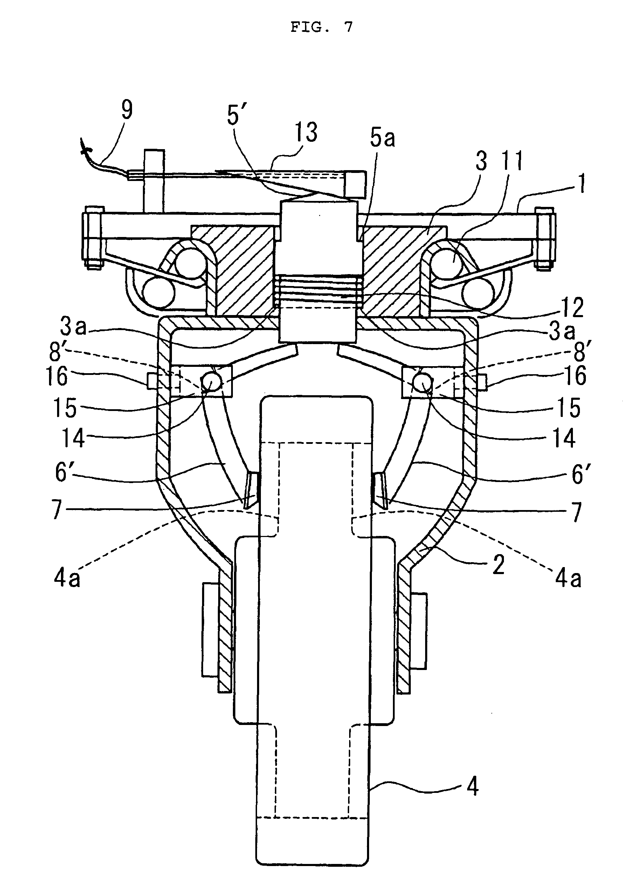

FIGS. 6 and 7 show the main part of a brake-equipped caster according to embodiment 2 of the present invention.

The brake-equipped caster according to embodiment 2 is designed to be held normally in an automatic halt condition, and to become capable of traveling when the operation mechanism (the brake lever) is activated. Thus, the effect of the activated operation mechanism 10 is opposite to that in the brake-equipped caster according to embodiment 1.

The brake-equipped caster according to embodiment 2 therefore differs from the brake-equipped caster according to embodiment 1 mainly in the shape of the brake arms 6'(6), the direction of the torque exerted by the torsion coil springs 8'(8) and the shape of the movable pin 5'(5).

In the following explanation, the components common to embodiments 1 and 2, such as the fitting seat 1, the support leg 2, the vertical axial member 3 and the tired wheel 4, will be assigned the same reference characters, and the description of those components will be omitted as appropriate.

As shown in FIGS. 6 and 7, in order to have the brake-equipped caster held normally in the automatic halt condition and to become capable of traveling when the operation mechanism (the brake lever) is activated, left and right brake arms 6', 6' in a pair are normally retained by elastic members (torsion coil springs) 8', 8' such that their lower ends (brake shoes 7, 7) are pressed against the lateral wheel surfaces 4a of a tired wheel 4.

Over a movable pin 5', an operation mechanism 10 is arranged to push down the movable pin 5' a specified distance, thereby causing the lower ends (brake shoes 7, 7) of the brake arms 6', 6' to draw apart from the lateral wheel surfaces 4a of the tired wheel 4, respectively.

The movable pin 5' is a cylindrical member of metal with a tapered top and a flat bottom, and has an annular ridge 5a at an intermediate position.

The movable pin 5' is allowed to move relatively up and down inside a vertical axial member 3, and is normally retained in a position with its ridge 5a butting against the lower surface of a fitting seat 1 (its uppermost position) by the restoring force of a compression coil spring 12 compressed on a step 3a of a vertical axial member 3, as described with respect to embodiment 1 (see paragraph No. [0014]).

The operation mechanism 10 pushes downward on the head of the movable pin 5 projecting upward beyond the fitting seat 1, thereby pushing down the movable pin 5 a specified distance, which is also described with respect to embodiment 1, (see paragraph No. [0015]).

Thus, also in embodiment 2, when the operation mechanism 10 (the brake lever 17) is activated, the pusher 13 gradually pushes down the movable pin 5', where the ridge 5a of the movable pin 5' draws away from the lower surface of the fitting seat 1, pressing the compression coil spring 12 downward (see FIG. 7), as in embodiment 1.

When the operation mechanism 10 is deactivated, the pusher 13 draws away from the movable pin 5', allowing the movable pin 5' to be pushed up by the restoring force of the compression coil spring 12 acting on the ridge 5a of the movable pin 5', until the ridge 5a butts against the lower surface of the fitting seat 1 again.

In the elevational view, the left and right brake arms 6', 6' as a pair are dogleg members of metal, arranged to form line symmetry with respect to the axis of the movable pin 5'.

The shape of the brake arm 6' is not restricted to this dogleg shape. The brake arm 6' of this embodiment is in a more sharply-bent dogleg shape, compared with the brake arm 6 of embodiment 1. It is desirable that the brake arms 6' be arranged such that their upper ends are always in contact with the lower end of the movable pin 5', in view of brake control (the so-called response).

The brake arms 6' are swingably fitted to the inner surface of the support leg 2. In the present embodiment, support members 15 are fixed to the inner surface of the support leg 2 by bolts 16 to form line symmetry. A horizontal shaft 14 extends through each support member 15, at right angles to arms of the support member 15. The horizontal shaft 14 rotatably extends through the intermediate angled portion of the brake arm 6. A torsion coil spring (the elastic member) 8' is connected to the support member 15 at one end and the brake arm 6 at the other end to apply a torque tending to cause the brake arm to turn in a direction causing the brake shoe 7 on the brake arm 6 to be pressed against the lateral wheel surface 4a of the tired wheel 4. Thus, the brake shoes 7, 7 are continuously pressed against the left and right lateral wheel surfaces 4a of the tired wheel 4, thereby braking the tired wheel.

Thus, as shown in FIG. 6, while the operation mechanism 10 is deactivated so that the movable pin 5' is retained in its uppermost position, the left and right brake arms 6', 6' as a pair are retained by the torque exerted by the torsion coil springs 8' such that the brake shoes 7, 7 at their lower ends are in contact with and continuously apply equal pressure on the left and right lateral wheel surfaces 4a of the tired wheel 4, thereby continuously braking the tired wheel.

As shown in FIG. 7, when the operation mechanism 10 is activated so that the movable pin 5' is pushed down, the upper ends of the brake arms 6, 6 go downward along with the movable pin 5', against the torque exerted by the torsion coil springs 8', so that the brake shoes 7, 7 at their lower ends gradually draw away from each other, and thus draw apart from the lateral wheel surfaces 4a of the tired wheel 4.

Thus, the brake-equipped caster according to embodiment 2 of the present invention is designed such that, normally, or while the operation mechanism 10 is deactivated, the operation mechanism 10 (pusher 13) is out of contact with the movable pin 5 as shown in FIG. 6 so that the braking effort is continuously applied to the tired wheel 4 to hold the tired wheel in an automatic halt condition.

When the operation mechanism 10 is activated, the pusher 13 of the operation mechanism 13 pushes down the movable pin 5, which in turn causes the left and right brake arms 6', 6' as a pair to turn against the torque exerted by the torsion coil springs 8', so that the brake shoes 7, 7 at their lower ends draw apart from the lateral wheel surfaces 4a of the tired wheel 4, so that a worker can move the wheeled platform by manual operation.

The above-described brake-equipped caster is thus designed to produce a braking effect by pressing the brake shoes 7 against the lateral wheel surfaces 4a of the tired wheel 4 as in embodiment 1, so that the brake shoes 7 do not wear down the tire of the tired wheel 4. The above-described brake-equipped caster therefore suffers minimized wear on the tire of the tired wheel and is not susceptible to poor road surface conditions.

Further, the function of braking the tired wheel by applying equal pressure on the left and right lateral wheel surfaces 4a, 4a of the tired wheel 4 can be maintained with a simple structure, reliably and durably, resulting in superior usability, economy and durability.

Further, fitting the caster with the brake system only requires mechanical fitting operations. Thus, conventional swivel casters without a braking function can be easily and economically converted into brake-equipped casters according to this embodiment.

The brake-equipped caster according to embodiment 2 is designed to be held normally in an automatic halt condition by the braking effort produced by the above-described structure and to become capable of traveling when the operation mechanism (the brake lever) is activated. This is suitable for wheeled platforms and the like used for transport on a sloping road surface requiring frequent braking operations, for example.

In the above, embodiments of the present invention have been described on the basis of the drawings. The present invention is, however, not restricted to the depicted embodiments, but should be considered to encompass those design changes and applications which a person skilled in the art would normally carry out without departing from the sprit and scope of the present invention.

For example, with respect to embodiment 1, a measure such as applying a lubricant on the tapered lower end portion 5b of the movable pin 5 to allow the upper ends of the brake arm 6 to smoothly slide thereon may be taken as appropriate.

## Claims

1. A brake-equipped swivel caster including a downward C-shaped support leg arranged under and rotatably fitted to a fitting seat by means of a vertical axial member and a thrust bearing, and a tired wheel arranged under and rotatably fitted to said support leg, comprising:
a movable pin extending through said vertical axial member and allowed to move up and down, said movable pin being normally retained in an uppermost position by an elastic member,
left and right brake arms in a pair each arranged with a lower end facing a lateral wheel surface of said tired wheel and an upper end in contact with said movable pin, and swingably fitted to an inner surface of said downward C-shaped support leg, at an intermediate position, said brake arms being normally retained by elastic members such that their lower ends thereof are a specified distance apart from said lateral wheel surfaces of said tired wheel, respectively,
a tapered portion constituting a lower end portion of said movable pin and having an angle of tapering capable of pushing outward on said upper ends of said brake arms in a pair to draw said brake arms away from each other, and
an operation mechanism arranged over said movable pin, capable of pushing down said movable pin a specified distance, thereby causing said lower ends of said brake arms to be pressed against said lateral wheel surfaces of said tired wheel.

2. A brake-equipped swivel caster including a downward C-shaped support leg arranged under and rotatably fitted to a fitting seat by means of a vertical axial member and a thrust bearing, and a tired wheel arranged under and rotatably fitted to said support leg, comprising:
a movable pin extending through said vertical axial member and allowed to move up and down, said movable pin being normally retained in an uppermost position by an elastic member,
left and right brake arms in a pair each arranged with a lower end facing a lateral wheel surface of said tired wheel and an upper end in contact with said movable pin, and swingably fitted to an inner surface of said downward C-shaped support leg, at an intermediate position, said brake arms being normally retained by elastic members such that their lower ends thereof are pressed against said lateral wheel surfaces of said tired wheel, respectively, and
an operation mechanism arranged over said movable pin, capable of pushing down said movable pin a specified distance, thereby causing said lower ends of said brake arms to draw apart from said lateral wheel surfaces of said tired wheel, respectively.

3. The brake-equipped swivel caster according to claim 1, wherein said upper ends of the left and right brake arms in a pair are in contact with an inclined surface of said tapered lower end portion of said movable pin at an angle allowing said brake arms to receive an outward pushing force greater in magnitude than a force which said elastic members exert on said brake arms, respectively.

4. The brake-equipped swivelcaster according to claim 1 or 2, wherein said left and right brake arms in a pair are in a dogleg shape from an elevational view and arranged to form line symmetry with respect to an axis of said movable pin.
